# EUROPÄISCHE PATENTANMELDUNG

(11) **EP 1 110 915 A2**
(43) Veröffentlichungstag der Anmeldung: **27.06.2001**
(21) Anmeldenummer: 00126571.9
(22) Anmeldetag: 12.12.2000
(51) Int. Cl.: C02F 3/12, B01D 21/01, B01D 21/24

(54) **Vorrichtung und Verfahren zur biologischen Abwasserreinigung**

(30) Priorität: 23.12.1999 DE 19962793
(71) Anmelder: Axel Johnson Engineering GmbH, 41468 Neuss (DE)
(72) Erfinder: Hother, Stefan, Dipl.-Ing., 40219 Düsseldorf (DE); Probst, Gerhard, 53229 Bonn (DE); Rocznik, Klaus, Dipl.-Ing., 53737 Sankt Augustin (DE); Striegel, Bernd, Dr., 31699 Beckedorf (DE)
(74) Vertreter: Hess, Peter K., Dipl.-Phys.

(57) **Zusammenfassung**

Die Erfindung betrifft eine Vorrichtung und ein Verfahren zur biologischen Abwasserreinigung. Erfahrungsgemäß ist ein Belebungsbecken (10) vorgesehen, in dem unter Zufuhr eines Katalysatormittels Abwasserinhaltsstoffe von im Abwasser schwebenden Abbaumitteln (11), wie z.B. Mikroorganismen, abgebaut werden. Im Belebungsbecken (10) ist wenigstens ein Lamellenpaket (50) angeordnet, in bzw. an dem die im Abwasser schwebenden Abbaumittel (11) durch Sedimentation abgeschieden werden, um als eingedickter Abbaumittelschlamm (11') in den Bodenbereich (15) des Belebungsbeckens (10) abzusinken. Im genannten Bodenbereich (15) des Belebungsbeckens (10) ist eine Abbaumittelschlamm-Zwangsrückführung (20, 22) vorgesehen, welche den eingedickten Abbaumittelschlamm (11') aufnimmt und dem Belebungsbecken (10) als schwebendes Abbaumittel (11) wieder zuführt.

## Beschreibung

Die vorliegende Erfindung betrifft eine Vorrichtung und ein Verfahren zur biologischen Abwasserreinigung nach den Ansprüchen 1 und 13. Insbesondere betrifft die vorliegende Erfindung eine Vorrichtung und ein Verfahren zur biologischen Abwasserreinigung, bei dem in einem Belebungsbecken wenigstens ein Lamellenpaket zur Abscheidung von im Abwasser schwebenden, biologisch aktiven Bakterienkulturen vorgesehen ist, sowie ein im Bodenbereich des Belebungsbeckens angeordnete Zwangsrückführungsvorrichtung.

Im Stand der Technik ist es an sich bekannt, zur Reinigung von Abwasser Belebungsbecken vorzusehen, in denen unter Sauerstoffzufuhr Abwasserschadstoffe von im Wasser schwebenden, biologisch aktiven Bakterienkulturen bzw. Mikroorganismen abgebaut werden. Ferner ist es bekannt, Nachklärbecken vorzusehen, in denen die biologisch aktiven Bakterienkulturen vom Wasser durch Sedimentation getrennt werden, wobei der sich ergebende Schlamm dann in das Belebungsbecken zurückgepumpt wird. Im Stand der Technik sind Belebungs- und Nachklärbecken somit als Verfahrenseinheit anzusehen, da das Belebungs- und das Nachklärbecken einen Kreislauf bilden, in dem die Bakteriendichte - gemessen als Trockensubstanzgehalt - im Belebungsbecken von der Sedimentationswirkung im Nachklärbecken abhängig ist.

Zur Abscheidung bzw. Sedimentation im Nachklärbecken ist weiterhin im Stand der Technik der Einsatz von Lamellenseperatoren vorgeschlagen worden, die aus einer Vielzahl von Lamellen bestehende Lamellenpakete verwenden. Über diese Lamellenpakete wird das Abwasser im Nachklärbecken geführt, was infolge der erheblichen Oberfläche der Lamellen zu der gewünschten Abscheidung der Bakterienkulturen als Schlamm führt.

Hierbei ist es wichtig, zwei grundlegend unterschiedliche Arten von Belebungsbecken zu unterscheiden. Zum einen die sogenannten Umlaufgräben, in denen das Abwasser-Bakterienschlammgemisch im Kreis zirkuliert, sowie sogenannte längsdurchströmte Becken, bei denen sowohl das Belebungsbecken als auch das Nachklärbecken in Reihe geschaltet sind und längs durchströmt werden.

Aus der DE-OS 43 29 239 ist ein Verfahren und eine Vorrichtung zur biologischen Abwasserreinigung bekannt, bei der der Bakterienanteil im Belebungsbecken durch Lamellenpakete erhöht wird, die am Strömungswegende des Belebungsbeckens vor dem Ablauf desselben beabstandet angeordnet sind. Das Vorsehen der Lamellenpakete im Belebungsbecken soll den Vorteil haben, daß eine Rückführung des sedimentierten Bakterienschlammes in einem gesonderten Rücklaufschlammstrom unnötig wird, wodurch eine Zerstörung der Flockenstruktur durch die eingesetzten Kreiselpumpen vermieden wird. Ferner soll eine Verstopfung der Lamellen durch Schlammablagerungen o.ä. vermieden werden.

Gegenüber diesem Stand der Technik beruht die vorliegende Erfindung auf der erfindungsgemäßen Beobachtung, daß das beschriebene Verfahren und die entsprechende Vorrichtung gemäß obigem Stand der Technik technisch unbrauchbar ist. Experimente haben gezeigt, daß das Anbringen der Lamellenpakete am Ende des im Stand der Technik beschriebenen längsdurchströmten Beckens dazu führt, daß sich der in bzw. an den Lamellen abgeschiedene Bakterienschlamm unterhalb der Lamellen sammelt und sich in die Lamellenpakete zurückstapelt, von wo aus er vom Abwasservolumenstrom in Richtung Nachklärbecken mitgerissen wird. Dies führt im Grenzfall zum Totalausfall des Systems.

Die vorliegende Erfindung stellt sich somit dem Problem, eine Vorrichtung und ein Verfahren zur biologischen Abwasserreinigung bereitzustellen, die technisch mit hoher Zuverlässigkeit funktionieren und zu der gewünschten Erhöhung des Bakteriengehaltes in der Belebungsstufe führen. Hierdurch wird es möglich, Investitionen für die Errichtung zusätzlicher Becken zur Sicherstellung der erforderlichen Reinigungsleistung zu vermeiden.

Das der Erfindung zugrunde liegende Problem wird durch eine Vorrichtung zur biologischen Abwasserreinigung gemäß Patentanspruch 1 sowie durch ein Verfahren gemäß Patentanspruch 13 gelöst.

Im einzelnen beruht die erfindungsgemäße Lösung gemäß den Patentansprüchen 1 und 13 auf das Vorsehen einer Abbaumittelzwangsrückführung im Bodenbereich des Belebungsbeckens unterhalb des eingesetzten Lamellenpakets. Infolge der Überströmung des Lamellenpakets durch das zu reinigende Abwasser werden die im Abwasser schwebenden Abbaumittel (Bakterienkulturen oder Mikroorganismen) durch Sedimentation abgeschieden und sinken als eingedickter Abbaumittelschlamm in den Bodenbereich des Belebungsbeckens. Im Bodenbereich ist die erfindungsgemäße Abbaumittel-Zwangsrückführung vorgesehen, die den eingedickten abgeschiedenen Abbaumittelschlamm aufnimmt und dem Belebungsbecken erneut zuführt. Mit dem derart erhöhten Gehalt an Bakterien/Mikroorganismen in der Belebungsstufe kann eine größere Leistungsfähigkeit bezogen auf den verfügbaren Reaktionsraum erreicht werden.

Gemäß der bevorzugten Ausführungsform nach Patentanspruch 4 ist zusätzlich zu dem Belebungsbecken ein Nachklärbecken vorgesehen, in dem die im Abwasser verbliebenen Abbaumittel durch Sedimentation abgeschieden werden. Der sich ergebende, eingedickte Abbaumittelschlamm wird dann über einen Rücklauf zum Belebungsbecken zurückgeführt. Die derart vorgesehene doppelte Rückführung des Abbaumittels einmal aus dem Endbereich des Belebungsbeckens und aus dem Nachklärbecken erlaubt eine sehr präzise Einstellung des Bakterien- bzw. Mikroorganismusgehalts im Belebungsbecken durch den Einsatz eines geeigneten

Regelkreises.

Gemäß der bevorzugten Ausführungsform nach Patentanspruch 6 besteht die erfindungsgemäß Abbaumittelzwangsrückführung zum einen aus einem Fördermittel wie z.B. einer Pumpe oder einem Heber (Patentanspruch 7), und zum anderen aus einem Bodenräumer (z.B. einen Zickert-Räumer, vgl. Patentanspruch 8). Diese erfindungsgemäße Ausgestaltung der Abbaumittel-Zwangsrückführung erlaubt in besonders effizienter Weise zum einen das Sammeln des im Bodenbereich des Belebungsbeckens unterhalb der Lamellen angesammelten Abbaumittelschlamms, und zum anderen das effiziente Abführen des gesammelten Schlamms zurück in das Belebungsbecken.

Gemäß der bevorzugten Ausführungsform nach Patentanspruch 9 ist der Bodenbereich unterhalb der erfindungsgemäßen Lamellenpakete im Verhältnis zur Wasseroberfläche zu der Abbaumittel-Zwangsrückführung hin geneigt. Die Neigung des Bodenbereiches erlaubt zusammen mit dem bevorzugt eingesetzten Bodenräumer ein besonders effizientes Sammeln des Abbaumittelschlammes im Bereich des erfindungsgemäß eingesetzten Fördermittels.

Bei der bevorzugten Ausführungsform gemäß Patentanspruch 10 wird das erfindungsgemäße, wenigstens eine Lamellenpaket am Strömungswegsende im Belebungsbecken angeordnet, wobei zusätzlich eine vom Abwasser überströmte Trennwand vorgesehen wird, die eine direkte Abwasserströmungseinwirkung auf das wenigstens eine Lamellenpaket verhindert. Hierdurch wird verhindert, daß das strömende Abwasser den Ablagerungsprozeß der Bakterien bzw. Mikroorganismenkulturen auf den Lamellen unerwünscht verwirbelt.

Die bevorzugten Ausführungsformen gemäß den Patentansprüchen 11 und 12 beschreiben zwei unterschiedliche Anordnungsmöglichkeiten der erfindungsgemäßen Lamellenpakete. Bei der besonders bevorzugten Ausführungsform nach Patentanspruch 12 werden die Lamellen parallel zur Abwasserströmungsrichtung angeordnet. In Verbindung mit der vom Abwasser überströmten Trennwand erlaubt dies einen besonders laminar und kontrolliert geführten Abwasservolumenstrom, der der effizienten Abscheidung im Belebungsbecken entgegenkommt.

Weitere bevorzugte Ausführungsformen ergeben sich auch aus den hier nicht im einzelnen diskutierten Unteransprüchen.

Im folgenden sollen bevorzugte Ausführungsformen der vorliegenden Erfindung unter Bezugnahme auf die Zeichnung diskutiert werden, in der zeigt:
- Fig.1a: eine schematische, perspektivische Ansicht eines Belebungsbecken vom Umlaufgrabentyps zu Illustrationszwecken;
- Fig.1b: eine schematische, perspektivische Ansicht eines Belebungsbeckens vom längs durchströmten Typ gemäß einer ersten bevorzugten Ausführungsform der vorliegenden Erfindung
- Fig.2a: eine Teilaufsicht auf den Endbereich eines längs durchströmten Belebungsbeckens gemäß einer zweiten bevorzugten Ausführungsform der vorliegenden Erfindung, mit parallel zur Abwasserströmungsrichtung angeordneten Lamellenpaketen;
- Fig.2b: eine Teilschnittansicht entlang der Linie B-B aus Fig.2a in Fließrichtung durch die Lamellen; und
- Fig.2c: eine Teilschnittansicht entlang der Linie A-A aus Fig.2a quer zur Abwasserfließrichtung auf die Lamelleneinheit.

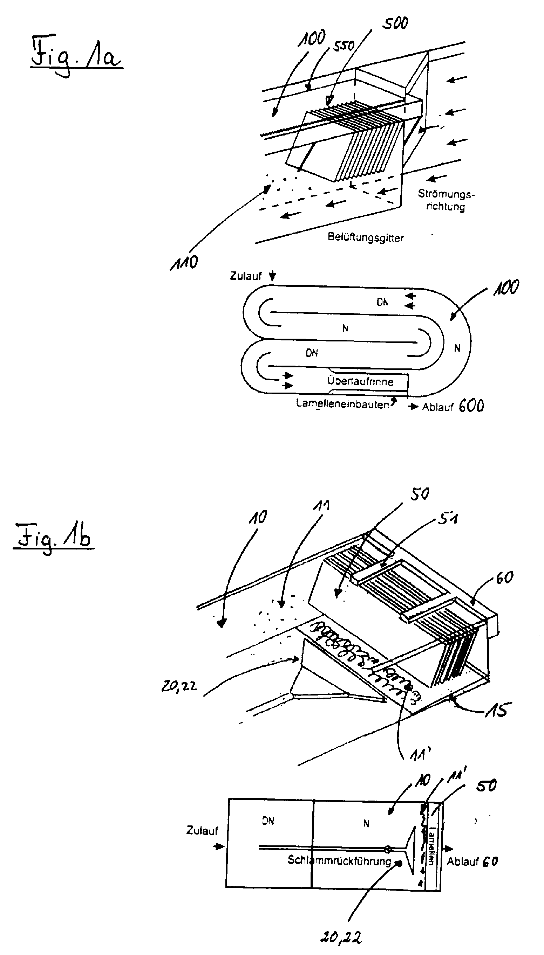

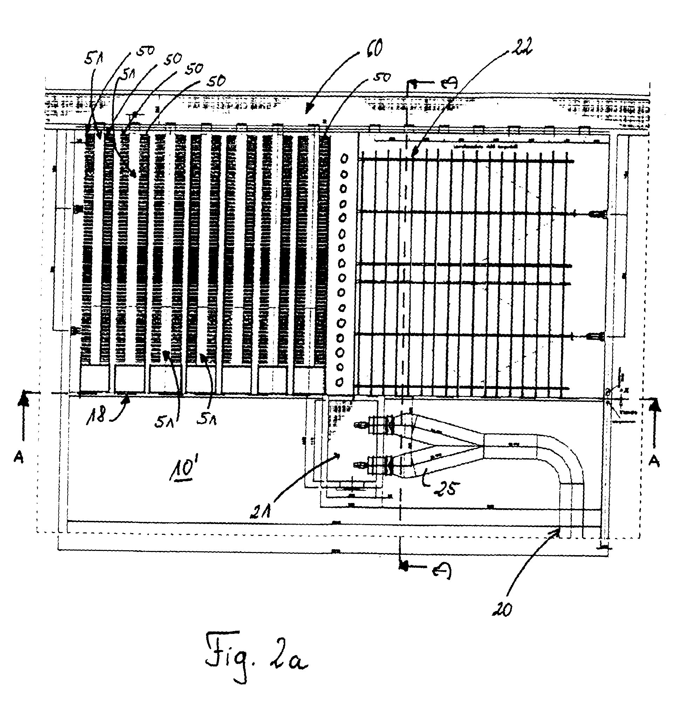

In Fig. 1a ist schematisch ein Belebungsbecken 100 vom Umlauftyp dargestellt. Wie man der unteren Darstellung der Figur 1a entnehmen kann, tritt das zu klärende Abwasser über einen Zulauf in das Belebungsbecken 100 ein und durchströmt den "Belebungsbeckenkreis" kreisförmig, wie durch die Doppelpfeile angedeutet. Die vorzusehenden Lamelleneinbauten 500, deren Lamellen in der in Fig. 1a dargestellten Ausführungsform gegen die Strömungsrichtung geneigt sind, werden derartig angebracht, daß das zu klärende Abwasser mit dem darin schwebenden Abbaumittel (Bakterienkulturen oder Mikroorganismen) die Lamelleneinbauten unterströmen. Durch das Vorsehen einer Überlaufrinne 550 wird ein Teil des Abwassers über die Lamellenoberflächen hinweg geführt und verläßt das Belebungsbecken 100 über einen Ablauf 600 hin zum Nachklärbecken (nicht dargestellt). Infolge einer geeigneten Bemaßung und Anordnung der Lamelleneinbauten 500 kann erreicht werden, daß die im zu klärendem Abwasser enthaltenden schwebenden Abbaumittel 110 sich auf der Lamellenoberfläche abscheiden und als Abbaumittelschlamm entlang den Lamellenoberflächen nach unten rutschen. Dort werden sie vom unterströmenden Abwasser aufgenommen und erneut im Belebungsbeckenkreis verteilt. Es ergibt sich unmittelbar, daß bei einem Belebungsbecken vom Umlauftyp die erfindungsgemäße Abbaumittel-Zwangsrückführung nicht notwendig ist, da der abgeschiedene Abbaumittelschlamm vom unterströmenden Abwasser aufgenommen und dem Belebungsbecken somit ohne besondere technische Maßnahmen der Schlammrückführung wieder zugeführt werden kann.

Im folgenden wird nun unter Bezugnahme auf Fig.1b ein erfindungsgemäßes Belebungsbecken 10 gemäß einer ersten bevorzugten Ausführungsform beschrieben. Wie man erkennen kann, handelt es sich bei dem Belebungsbecken 10 um ein längsdurchströmtes Becken, dessen vorderes Ende mit dem Zulauf aus Vereinfachungsgründen in der oberen Darstellung nicht dargestellt ist. Dargestellt ist hingegen das hintere Ende des erfindungsgemäßen Belebungsbeckens 10 mit dem Ablauf 60, der das Belebungsbecken 10 mit einem an sich bekannten und hier aus Vereinfachungsgründen nicht näher dargestellten Nachklärbecken verbindet. Unmittelbar im Bereich des Ablaufes 60 befindet sich das erfindungsgemäße Lamellenpaket 50, das aus einer Vielzahl von hintereinander und im wesentlichen parallel angeordneten Einzellamellen besteht. Der Aufbau eines Lamellenabscheiders ist im Stand der Technik bekannt und braucht hier nicht im einzelnen diskutiert zu werden. Der Einbau des Lamellenpaketes hängt von dem eingesetzten Lamellentyp ab. In der in Fig.1b gezeigten exemplarischen Ausführungsform sind die Lamellen zum Ablauf 60 hin nach oben geneigt; eine vor dem Lamellenpaket anzuordnende Trennwand mit Überlaufkante oder einem Unterströmungsdurchbruch wurde aus Vereinfachungsgründen nicht vorgesehen. Es ist dem Fachmann jedoch klar, daß je nach eingesetztem Lamellentyp unterschiedliche Lamellenorientierungen mit und ohne stromaufwärts vorgeschalteten über- oder unterströmten Trennwänden vorgesehen werden können.

Beim erfindungsgemäßen Betrieb des Lamellenabscheiders strömt das zu klärende Abwasser über die Lamellenoberflächen, wobei die im Abwasser schwebenden Abbaumittel (auf die im folgenden der Einfachheit halber nur als Bakterienkulturen Bezug genommen wird) sich auf den Lamellenoberflächen abscheiden und infolge der Lamellenneigung sich im Bodenbereich 15 des Lamellenpaketes als eingedickter Bakterienschlamm sammeln. Erfindungsgemäß wird nun eine Abbaumittelschlamm-Zwangsrückführung 20, 22 vorgesehen, die in der in Fig. 1b dargestellten Ausführungsform lediglich schematisch dargestellt ist. Zweck der erfindungsgemäßen Abbaumittelschlamm-Zwangsrückführung 20, 22 ist, den sich im Bodenbereich 15 angesammelten Bakterienschlamm aufzunehmen und zurück zum Zulauf des Belebungsbeckens zu fördern, wo er mit dem neu eintretenden Abwasser dem Klärkreislauf innerhalb des Belebungsbeckens 10 erneut zugeführt wird.

In Fig. 1b nicht dargestellt ist - wie bereits erwähnt - das dem Ablauf 60 nachgeschaltete Nachklärbecken, in welchem die im abgeflossenen Abwasser verbliebenen Bakterienkulturen separat abgeschieden und nachfolgend gesammelt werden. Auch die im Nachklärbecken derart abgeschiedenen Bakterienkulturen werden über den Zulauf dem Belebungsbecken 10 erneut zugeführt. Infolge der separaten Rückführung der Bakterienkulturen sowohl innerhalb des Belebungsbeckens als auch vom Nachklärbecken läßt sich mit Hilfe einer geeigneten Regelungselektronik. Bevorzugt geschieht dies durch Regelung der Strömungsgeschwindigkeit des zu klärenden Abwassers zwischen den Lamellen und dadurch des Abscheidegrades des Abbaumittels mit Hilfe von im Ablauf der einzelnen Lammellenpakete angebrachten Regelamaturen.

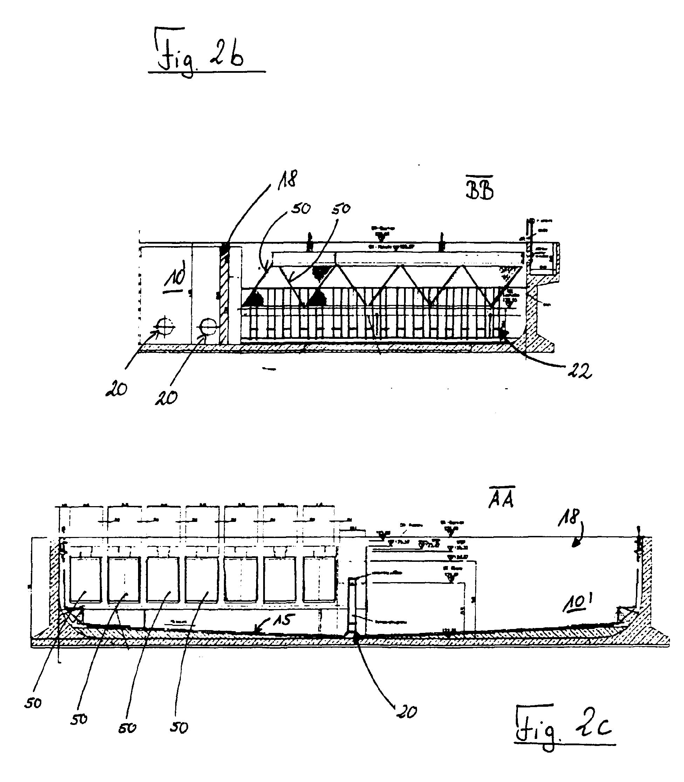

In den Fign. 2a, 2b, 2c ist eine weitere erfindungsgemäße Ausführungsform eines Belebungsbeckens 10' dargestellt. Auch bei dieser Ausführungsform werden die erfindungsgemäßen Lamellenpakete 50 am Beckenende des Belebungsbeckens 10' eingebaut. Zwischen dem Belebungsbecken 10' und dem Lamellenpaket 50 wird eine überströmte Zwischenwand 18 vorgesehen, die eine Störung des Schlammabsetzens unterhalb der Lamellen infolge ungewollter Strömungen bzw. ungewolltem Lufteintrag aus dem belüfteten Belebungsbecken 10' vermeidet. Das Abwasser mit den darin schwebenden Bakterienkulturen überströmt die genannte Trennwand 18 und wird seitlich zwischen die erfindungsgemäßen Lamellenpakete 50 eingeleitet. Die Lamellen stehen in einem Winkel von 60 Grad mit einem definierten Abstand hintereinander. Der Eintritt des Abwassers erfolgt seitlich in die Lamellen, um den Trennvorgang innerhalb eines Lamellenzwischenraums sowenig wie möglich zu stören. Im Lamellenzwischenraum trennt sich ein Teil der im Wasser schwebenden Bakterienkulturen auf den Lamellenoberflächen ab. Der insofern feststoffarme Abwasserstrom fließt dabei nach oben und wird über den Lamellen linienförmig mittels Rinnen bzw. getauchten Rohren abgezogen. Dieser Strom wird zur Nachklärung in ein Nachklärbecken (nicht dargestellt) weitergeleitet.

Die an den Lamellenoberflächen 50 sedimentierten Bakterienkulturen sinken infolge der Schwerkraft nach unten und dicken dabei ein. Am Ende der Lamellenplatten rutscht der sich ergebende Bakterienschlamm ab und sinkt zu Boden. Da infolge der Trennwand Störungen unterhalb der Lamellen vermieden werden, wird der erreichte Schlammeindickgrad beibehalten bzw. im Bodenbereich 15 noch weiter ansteigen.

Gemäß einer bevorzugten Ausführungsform ist der Boden unterhalb der Lamellenpakete 50 mit einem leichten Gefälle ausgelegt, wie man insbesondere der Fig. 2c entnehmen kann. Zentral am tiefsten Punkt des Belebungsbeckens 10' befindet sich das erfindungsgemäße Fördermittel 20, das bevorzugt als Pumpe oder Heber ausgebildet ist. Zusammen mit dem insbesondere der Fig. 2a entnehmenbaren Bodenräumer 22, der bevorzugt als Zickerträumer ausgebildet ist, bildet das Fördermittel 20 und der Bodenräumer 22 die erfindungsgemäße Abbaumittelschlamm-Zwangsrückführung, die den im Bodenbereich 15 sedimentierten Bakterienschlamm zurück zum Zulauf des Belebungsbeckens 10' fördert. Durch das Vorsehen des erfindungsgemäßen Gefälles im Bodenbereich 15 gleitet der sedimentierte Bakterienschlamm hinunter in Richtung des erfindungsgemäßen Fördermittels 20. Unterstützt wird dieser Gleitvorgang durch den Bodenräumer 22, der somit in erster Linie nicht zum Schieben des sedimentierten Schlammes dient (hierzu wären Schildhöhen von einigen Zentimetern, wie bevorzugt verwendet, zu gering), sondern vielmehr zur Überwindung der Bodenhaftung und somit zur Unterstützung des Gleitens des Schlamms. Durch das Gefälle und durch den Bodenräumer 22 wird sichergestellt, daß vor dem Fördermittel 20 immer ein ausreichendes Schlammpolster vorhanden ist. Die Förderung des Schlammes erfolgt bevorzugt auf der Basis einer kommunizierenden Röhre. Hierzu wird in einer Schlammsammelrinne über Pumpen konstant ein etwas geringerer Wasserspiegel als im Belebungsbecken eingestellt, wodurch die unterschiedlichen Wasserspiegelhöhen zu der treibenden Kraft werden, die den Schlamm aus dem Sammelraum in die Schlammsammelschiene heben. Der Hebevorgang kann durch den Einsatz von Luft in den Steigröhren gesteigert werden.

Gemäß einer weiteren bevorzugten Ausführungsform ist am Boden eine schlitzartige Einlaufkonstruktion (nicht dargestellt) vorgesehen, die eine linienartige Absaugung des Schlammvorrats ermöglichen soll. Der sedimentierte Schlamm in der Schlammsammelrinne wird über eine Pumpe an den Anfang des Belebungsbeckens 10' zurückgefördert. Aus dieser Fördermenge ergibt sich auch die für das Heben des Bakterienschlammes erforderliche Wasserspiegeldifferenz.

Im folgenden sind unter Bezugnahme auf die Fign. 2a, 2b, 2c Einzelheiten des Aufbaus der zweiten erfindungsgemäßen Ausführungsform näher beschrieben.

In Fig. 2a dargestellt ist eine Teilschnittaufsicht auf die erfindungsgemäßen Lamellenpakete 50. In der linken Bildhälfte ist die Aufsicht auf die Lamellenpakete und die dazwischengelegenen Ablaufrinnen 51 dargestellt. In der Mitte erkennbar ist die erfindungsgemäße Schlammhebekonstruktion mit den kreisförmig dargestellten Schlammheberohren. Auf der rechten Seite erkennbar ist der erfindungsgemäß besonders bevorzugte Zickerträumer 22, der parallel zum Boden des Belebungsbeckens 10' senkrecht zur Abwasserstromrichtung verschiebbar ist. Unten in Fig. 2a ist der bereits erwähnte Schlammsammelschacht 21 zu erkennen, sowie die Pumpenanordnung 25 zum Abpumpen des Bakterienschlamms.

Die Fig. 2b stellt einen Schnitt entlang der Linie B-B der Fig. 2a dar. Erkennbar ist im linken Bildbereich das erfindungsgemäße Fördermittel 20 sowie die Trennwand 18 in einem Teilschnitt in Abwasserfließrichtung. Deutlich erkennbar ist die 60 Grad-Neigung der erfindungsgemäßen Lamellenpakete 50, sowie der unterhalb der Lamellenpakete 50 angeordnete Bodenräumer 22.

Die Fig. 2c, die einer Teilschnittansicht entlang der Linie A-A aus Fig. 2a entspricht, entspricht dem Blick quer zur Abwasserfließrichtung auf die Lamelleneinheit 50. Obgleich die Anlage symmetrisch ausgebildet ist, ist der besseren Darstellung wegen nur der linke Teilflügel dargestellt.

## Patentansprüche

1. Vorrichtung zur biologischen Abwasserreinigung, umfassend:
**a.** ein Belebungsbecken (10; 10'), in dem unter Zufuhr eines Katalysatormittels Abwasserinhaltsstoffe von im Abwasser schwebenden Abbaumitteln (11) abgebaut werden;
**b.** wenigstens ein im Belebungsbecken (10; 10') angeordnetes Lamellenpaket (50), in bzw. an dem die im Abwasser schwebenden Abbaumittel (11) durch Sedimentation abgeschieden werden, um als eingedickter Abbaumittelschlamm (11') in den Bodenbereich (15) des Belebungsbeckens (10; 10') abzusinken; und
**c.** eine im genannten Bodenbereich (15) des Belebungsbeckens (10; 10') angeordnete Abbaumittelschlamm-Zwangsrückführung (20, 22), welche den eingedickten Abbaumittelschlamm (11') aufnimmt und dem Belebungsbecken (10; 10') als schwebendes Abbaumittel (11) wieder zuführt.

2. Vorrichtung zur biologischen Abwasserreinigung nach Anspruch 1, dadurch gekennzeichnet, daß es sich bei dem genannten Katalysatormittel um Luft- bzw. Sauerstoff handelt, das in das Belebungsbecken (10; 10') mittels Düsen eingeblasen wird.

3. Vorrichtung zur biologischen Abwasserreinigung nach Anspruch 1 oder 2, dadurch gekennzeichnet, daß es sich bei dem genannten Abbaumittel (11) um biologisch aktive Bakterienkulturen oder Mikroorganismen handelt, die die Abwasserinhaltsstoffe in biologisch unbedenkliche Endprodukte umwandeln.

4. Vorrichtung zur biologischen Abwasserreinigung nach einem der vorigen Ansprüche, dadurch gekennzeichnet, daß des weiteren ein mit dem Belebungsbecken (10; 10') operativ verbundenes Nachklärbecken (30) vorgesehen ist, in welchem die im Abwasser verbliebenen Abbaumittel (11) durch Sedimentation abgeschieden werden, um als eingedickter Abbaumittelschlamm (11') über einen Rücklauf zum Belebungsbecken (10; 10') zurückgeführt zu werden.

5. Vorrichtung zur biologischen Abwasserreinigung nach Anspruch 4, dadurch gekennzeichnet, daß in dem genannten Nachklärbecken (30) Lamellenabscheider vorgesehen sind.

6. Vorrichtung zur biologischen Abwasserreinigung nach einem der vorigen Ansprüche, dadurch gekennzeichnet, daß die genannte Abbaumittel-Zwangsrückführung (20, 22) ein Fördermittel (20) und einen Bodenräumer (22) umfaßt, die operativ zusammenwirken, um den im Bodenbereich (15) des Belebungsbeckens (10; 10') angesammelten eingedickten Abbaumittelschlamm zunächst zu sammeln und dann dem Belebungsbecken wieder zuzuführen.

7. Vorrichtung zur biologischen Abwasserreinigung nach Anspruch 6, dadurch gekennzeichnet, daß es sich bei dem genannten Fördermittel (20) um eine Pumpe oder einen Heber handelt.

8. Vorrichtung zur biologischen Abwasserreinigung nach Anspruch 6 oder 7, dadurch gekennzeichnet, daß es sich bei dem genannten Bodenräumer (22) um einen Zickert-Räumer handelt.

9. Vorrichtung zur biologischen Abwasserreinigung nach einem der vorigen Ansprüche, dadurch gekennzeichnet, daß der genannte Bodenbereich (15) sich bis unterhalb des wenigstens einen Lamellenpaketes (50) erstreckt und ein im Verhältnis zur Abwasseroberfläche zur Abbaumittel-Zwangsrückführung hin geneigtes Bodenstück enthält, dessen Neigung die Rückführung des eingedickten Abbaumittelschlamms unterstützt.

10. Vorrichtung zur biologischen Abwasserreinigung nach Anspruch 1, dadurch gekennzeichnet, daß es sich bei dem genannten Belebungsbecken (10; 10') um ein längsdurchströmtes Becken handelt, bei dem das wenigstens eine Lamellenpaket (50) am Strömungswegende angeordnet ist und zusätzlich eine offene Trennwand (18) stromaufwärts vorgesehen ist, die eine direkte Abwasserströmungseinwirkung auf das wenigstens eine Lamellenpaket (50) verhindert.

11. Vorrichtung zur biologischen Abwasserreinigung nach Anspruch 10, dadurch gekennzeichnet, daß die Lamellen des wenigstens einen Lamellenpakets (50) senkrecht zur Abwasserströmungsrichtung angeordnet und von der Trennwand (18) weg nach oben geneigt sind.

12. Vorrichtung zur biologischen Abwasserreinigung nach einem der Ansprüche 6-10, dadurch gekennzeichnet, daß die Lamellen des wenigstens einen Lamellenpakets (50) parallel zur Abwasserströmungsrichtung angeordnet sind und der Bodenräumer (22) den eingedickten Abbaumittelschlamm (11') im genannten Bodenbereich (15) zum Fördermittel (20) hin räumt, wo er vom genannten Fördermittel (20) aufgenommen wird.

13. Verfahren zur biologischen Abwasserreinigung, das die folgenden Schritte umfaßt:
**a)** Zuführen eines Katalysatormittels in ein Belebungsbecken (10; 10') zum Abbau von Abwasserinhaltsstoffen durch im Abwasser schwebenden Abbaumitteln (11);
**b)** Anordnen von wenigstens einem Lamellenpaket (50) in dem genannten Belebungsbecken (10; 10'), um die im Abwasser schwebenden Abbaumittel (11) durch Sedimentation abzuscheiden, wobei die abgeschiedenen Abbaumittel (11) als eingedickter Abbaumittelschlamm in den Bodenbereich (15) des Belebungsbeckens (10; 10') absinken; und
**c)** Rückführung des im Bodenbereich (15) des Belebungsbeckens (10; 10') abgesunkenen Abbaumittelschlammes zum Zulauf des Belebungsbeckens (10; 10').
